# EUROPEAN PATENT SPECIFICATION

(11) **EP 2 021 292 B1**
(45) Date of publication and mention of the grant of the patent: **18.01.2012**
(21) Application number: 07728684.7
(22) Date of filing: 01.05.2007
(51) Int. Cl.: C02F 11/00, C02F 11/14, C09K 3/22, B09B 3/00, C02F 1/56, C02F 103/10, C02F 103/16

(54) **SUPPRESSION OF DUST**
UNTERDRÜCKUNG VON STAUB
SUPPRESSION DE POUSSIÈRE

(30) Priority: 19.05.2006 GB 0610000
(43) Date of publication of application: 11.02.2009
(73) Proprietor: BASF SE, 67056 Ludwigshafen (DE)
(72) Inventor: LAMPERD, John, Mandurah, Western Australia 6210 (AU); KAISER, Lloyd, Western Australia 6018 (AU)
(74) Representative: Peatfield, Jeremy William
(86) International application number: PCT/EP2007/054230
(87) International publication number: WO 2007/134953

(56) References cited:
- WO-A-2004/060819
- WO-A1-01/92167
- US-A- 5 181 957
- US-A- 5 215 784
- PEARSE M J: "An overview of the use of chemical reagents in mineral processing" MINERALS ENGINEERING, PERGAMON PRESS , OXFORD, GB, vol. 18, no. 2, February 2005 (2005-02), pages 139-149, XP004729297 ISSN: 0892-6875

## Description

The present invention relates to the use of a polymer in the transfer of a suspension of particulate mineral material as a fluid to a deposition area which is allowed to stand and dewater, for the purpose of suppressing dust formation of the dewatered material, to the surface dries,
in which the particulate mineral material is red mud,
wherein the polymer is a an aqueous solution at a concentration of 0.25 to 5% bv weight of synthetic water-soluble polymer formed from one or more ethylenically unsaturated monomers having an intrinsic viscosity of at least 4 dl/g which is a homopolymer of acrylamide or a copolymer of acrylamide with sodium acrylate.

Processes of treating mineral ores in order to extract mineral values will normally result in waste material. Often the waste material consists of an aqueous slurry or sludge comprising particulate mineral material, for instance clay, shale, sand, grit, metal oxides etc admixed with water.

In some cases the waste material such as mine tailings can be conveniently disposed of in an underground mine to form backfill. Generally backfill waste comprises a high proportion of coarse large sized particles together with other smaller sized particles and is pumped into the mine as slurry where it is allowed to dewater leaving the sedimented solids in place. It is common practice to use flocculants to assist this process by flocculating the fine material to increase the rate of sedimentation. However, in this instance, the coarse material will normally sediment at a faster rate than the flocculated fines, resulting in a heterogeneous deposit of coarse and fine solids.

For other applications it may not be possible to dispose of the waste in a mine. In these instances, it is common practice to dispose of this material by pumping the aqueous slurry to lagoons, heaps or stacks and allowing it to dewater gradually through the actions of sedimentation, drainage and evaporation.

There is a great deal of environmental pressure to minimise the allocation of new land for disposal purposes and to more effectively use the existing waste areas. One method is to load multiple layers of waste onto an area to thus form higher stacks of waste. However, this presents a difficulty of ensuring that the waste material can only flow over the surface of previously rigidified waste within acceptable boundaries, is allowed to rigidify to form a stack, and that the waste is sufficiently consolidated to support multiple layers of rigidified material, without the risk of collapse or slip. Thus the requirements for providing a waste material with the right sort of characteristics for stacking is altogether different from those required for other forms of disposal, such as back-filling within a relatively enclosed area.

In a typical mineral processing operation, waste solids are separated from solids that contains mineral values in an aqueous process. The aqueous suspension of waste solids often contain clays and other minerals, and are usually referred to as tailings. This is true in a variety of mineral solids including tailings from oil sands. These solids are often concentrated by a flocculation process in a thickener to give a higher density underflow and to recover some of the process water. It is usual to pump the underflow to a surface holding area, often referred to as a tailings pit or dam. Once deposited at this surface holding area, water will continue to be released from the aqueous suspension resulting in further concentration of the solids over a period of time. Once a sufficient volume of water has been collected this is usually pumped back to the mineral processing plant.

The tailings dam is often of limited size in order to minimise the impact on the environment. In addition, providing larger dams can be expensive due to the high costs of earth moving and the building of containment walls. These dams tend to have a gently sloping bottom which allows any water released from the solids to collect in one area and which can then be pumped back to the plant. A problem that frequently occurs is when fine particles of solids are carried away with the run-off water, thus contaminating the water and having a detrimental impact on subsequent uses of the water.

In many mineral processing operations, for instance a mineral sands beneficiation process, it is also common to produce a second waste stream comprising of mainly coarse (> 0.1 mm) mineral particles. It is particularly desirable to dispose of the coarse and fine waste particles as a homogeneous mixture as this improves both the mechanical properties of the dewatered solids, greatly reducing the time and the cost eventually required to rehabilitate the land. However, this is not usually possible because even if the coarse waste material is thoroughly mixed into the aqueous suspension of fine waste material prior to deposition in the disposal area, the coarse material will settle much faster than the fine material resulting in banding within the dewatered solids. Furthermore, when the quantity of coarse material to fine material is relatively high, the rapid sedimentation of the coarse material may produce excessive beach angles which promotes the run off of aqueous waste containing high proportions of fine particles, further contaminating the recovered water. As a result, it is often necessary to treat the coarse and fine waste streams separately, and recombine these material by mechanically re-working, once the dewatering process is complete.

Attempts have been made to overcome all the above problems by treating the feed to the tailings dam using a coagulant or a flocculant to enhance the rate of sedimentation and/or improve the clarity of the released water. However, this has been unsuccessful as these treatments have been applied at conventional doses and this has brought about little or no benefit in either rate of compaction of the fine waste material or clarity of the recovered water.

Large quantities of particulate material such as tailings from mineral processing operations are discharged as aqueous slurries into lagoons, ponds or dams. The material dries into a mechanically solid form as a result of the combination of evaporation, sedimentation and drainage. The particulate material tends to contain a large proportion of small size particles and as the surface dries the action of wind can result in airborne dust. This can be also the case where the deposited material has been suitably dewatered and/or formed into rigidified stacks.

Such dust from waste deposits can be both an environmental and health hazard, particularly for highly alkaline materials such as red mud or tailings that contain heavy metals etc. Nevertheless, dust formation for any of the mineral materials will represent a hazard. It would therefore be desirable to find a solution to the dusting problem associated with dewatered suspensions of red mud.

In the Bayer process for recovery of alumina from bauxite, the bauxite is digested in an aqueous alkaline liquor to form sodium aluminate which is separated from the insoluble residue. This residue consists of both sand, and fine particles of mainly ferric oxide. The aqueous suspension of the latter is known as red mud.

After the primary separation of the sodium aluminate solution from the insoluble residue, the sand (coarse waste) is separated from the red mud. The supernatant liquor is further processed to recover aluminate. The red mud is then washed in a plurality of sequential washing stages, in which the red mud is contacted by a wash liquor and is then flocculated by addition of a flocculating agent. After the final wash stage the red mud slurry is thickened as much as possible and then disposed of. Thickening in the context of this specification means that the solids content of the red mud is increased. The final thickening stage may comprise settlement of flocculated slurry only, or sometimes, includes a filtration step. Alternatively or additionally, the mud may be subjected to prolonged settlement in a lagoon. In any case, this final thickening stage is limited by the requirement to pump the thickened aqueous suspension to the disposal area.

The mud can be disposed of and/or subjected to further drying for subsequent disposal on a mud stacking area. To be suitable for mud stacking the mud should have a high solids content and, when stacked, should not flow but should be relatively rigid in order that the stacking angle should be as high as possible so that the stack takes up as little area as possible for a given volume. The requirement for high solids content conflicts with the requirement for the material to remain pumpable as a fluid, so that even though it may be possible to produce a mud having the desired high solids content for stacking, this may render the mud unpumpable.

The sand fraction removed from the residue is also washed and transferred to the disposal area for separate dewatering and disposal.

EP-A-388108 describes adding a water-absorbent, water-insoluble polymer to a material comprising an aqueous liquid with dispersed particulate solids, such as red mud, prior to pumping and then pumping the material, allowing the material to stand and then allowing it to rigidify and become a stackable solid. The polymer absorbs the aqueous liquid of the slurry which aids the binding of the particulate solids and thus solidification of the material. However this process has the disadvantage that it requires high doses of absorbent polymer in order to achieve adequate solidification. In order to achieve a sufficiently rigidified material it is often necessary to use doses as high as 10 to 20 kilograms per tonne of mud. Although the use of water swellable absorbent polymer to rigidify the material may appear to give an apparent increase in solids, the aqueous liquid is in fact held within the absorbent polymer. This presents the disadvantage that as the aqueous liquid has not actually been removed from the rigidified material and under certain conditions the aqueous liquid could be desorbed subsequently and this could risk re-fluidisation of the waste material, with the inevitable risk of destabilising the stack. This technique does not result in dewatering of the suspension and furthermore gives no indication that the suppression would be achieved.

WO-A-96/05146 describes a process of stacking an aqueous slurry of particulate solids which comprises admixing an emulsion of a water-soluble polymer dispersed in a continuous oil phase with the slurry. Preference is given to diluting the emulsion polymer with a diluent, and which is preferably in a hydrocarbon liquid or gas and which will not invert the emulsion. Therefore it is a requirement of the process that the polymer is not added in to the slurry as an aqueous solution. There is no disclosure that dewatering and rigidification can be achieved sufficient to form stacks of the mineral material by the addition of an aqueous solution of polymer. Furthermore, there is no indication in this document that dust suppression of the stacked material would be achieved.

WO-A-0192167 describes a process where a material comprising a suspension of particulate solids is pumped as a fluid and then allowed to stand and rigidify. The rigidification is achieved by introducing into the suspension particles of a water soluble polymer which has an intrinsic viscosity of at least 3 dl/g. This treatment enables the material to retain its fluidity whilst being pumped, but upon standing causes the material to rigidify. This process has the benefit that the concentrated solids can be easily stacked, which minimises the area of land required for disposal. The process also has the advantage over the use of cross linked water absorbent polymers in that water from the suspension is released rather than being absorbed and retained by the polymer. The importance of using particles of water soluble polymer is emphasised and it is stated that the use of aqueous solutions of the dissolved polymer would be ineffective. Very efficient release of water and convenient storage of the waste solids is achieved by this process, especially when applied to a red mud underflow from the Bayer alumina process. Although this technique provides suitable dewatering and rigidification of suspensions of particulate mineral material there is nothing to indicate that dust suppression can be achieved.

WO2004/060819 describes a process in which material comprising an aqueous liquid with dispersed particulate solids is transferred as a fluid to a deposition area, then allowed to stand and rigidify, and in which rigidification is improved whilst retaining the fluidity of the material during transfer, by combining with the material an effective rigidifying amount of an aqueous solution of a water-soluble polymer. Also described is a process in which dewatering of the particulate solids is achieved. Although this process of the significant improvements in rigidification and dewatering of suspensions of particulate mineral material, there is nothing in this disclosure that indicate any improvement in dust suppression would be achieved.

In the case of oil sands processing, the ore is processed to recover the bitumen fraction, and the remainder, including both process material and the gangue, constitutes the tailings that are not valuable and are to be disposed of. In oil sands processing, the main process material is water, and the gangue is mostly sand with some silt and clay. Physically, the tailings consist of a solid part (sand tailings) and a more or less fluid part (sludge). The most satisfactory place to dispose of these tailings would be in the existing excavated hole in the ground. Nevertheless the sand and the sludge components would occupy a larger volume than the ore from which it was processed.

In the process for recovery of heavy oil and bitumen from oil sand deposits, when using open cast mining, the oil or bitumen is extracted either by a hot-water process in which oil sands are mixed with 65°C (150 °F) water and caustic or by a low-energy extraction process run at lower temperatures without caustic. However, both processes generate large volumes of tailings which consist of the whole oil sand ore body plus net additions of process water less only the recovered bitumen product.

These oil sand tailings can be subdivided into three categories; viz.: (1) screen oversize, (2) coarse or sand tailings (the fraction that settles rapidly), and (3) fine or tailings sludge (the fraction that settles slowly). Thus the oil sands tailing are made up of particles of different sizes.

Typically these oil sand tailings are piped to a tailings pond for disposal. The coarse sands settle first with fine particles settling only very slowly. These fine particles form highly stable fines suspensions in water containing as much as about 30 percent by weight solids. Over time these fine particles settle to form a substantially solid clay sediment thus filling the lagoon and requiring the creation of new lagoons.

It is well known to concentrate these oil sand tailings in a thickener to give a higher density underflow and to recover some of the process water as mentioned above.

For example, Xu.Y et al, Mining Engineering, November 2003, p.33-39 describes the addition of anionic flocculants to the oil sand tailings in the thickener before disposal.

The underflow can be disposed of and/or subjected to further drying for subsequent disposal in an oil sand tailings stacking area. Nevertheless due to the fine particles size component the dried oil sand tailings can also suffer the problem of airborne dust forming.

Various techniques of dust suppression of particulate material is described in a prior art. US 5256169, US 5863456 and US 5958287 each described dust suppression by applying to the suspension of variety of non polymeric materials, including emulsifiable process oil or surfactant type materials.

GB 2079772 is concerned with the suppression of dust from material such as coal using polyethylene oxide solutions and refers to using a variety of methods such as spraying, slurrying and rinsing. The polyethylene oxides are said to have molecular weights of at least about 6500. However, the treatment appears to be exclusively directed to hydrophobic substrates such as coal fines and does not achieve dust suppression during a dewatering activity.

US4469612 concerns agglomerating oil shale fines using aqueous solutions of copolymers of acrylic acid or methacrylic acid. Fines are said to be removed by treating the extracted oil shale using solutions of the acrylic polymer. It is stated that the mineral derived fines are contacted with a liquid containing the polymer by spraying or optimising liquid or immersing the fines in the liquid. There is no disclosure of minimising dust formation of particulate material that involves treating a suspension of the particulate material that is subsequently dewatered.

Soviet Union patent 1371965 describes spraying a variety of liquids including solutions of polymers onto the surface of a substrate in order to suppress dust. There is no disclosure of combining a polymer with a suspension of particulate mineral material which is dewatered such that the suspension is dewatered resulting in material with improved dust suppression.

The article by JGS van Jaarsveld et al entitled "The stabilisation of mine tailings by reactive geopolymerisation" Publications of the Australasian Institute of Mining and Metallurgy (2000), 5/2000(MINPREX 2000), 363-371 describes geopolymers that are all inorganic and referred to as alkaline silicates. The exact means of polymerisation is not stated although the use of silicon acetate solution is mentioned and this is likely to polymerised to a three-dimensional insoluble continuous crystal gel similar to the well known reaction of sodium silicate. In addition the doses of geo polymer are very high at between eight and 40% and furthermore the treatment required sufficient curing time in order to achieve a structuring which reduces the dust. Furthermore there is no disclosure of achieving dust suppression of a particulate material treating a suspension of the particulate material which is dewatered.

US 5181957 describes a method for the suppression of bauxite dust emissions from dry, finely divided bauxite ore. The method includes the step of contacting the bauxite or with an aqueous solution of a water-soluble vinyl addition polymer selected from the group of non-ionic and anionic water-soluble vinyl addition polymers. The polymers are said to have molecular weight of between one million and 15 million.

US 5215784 is directed to a method for suppressing the dusting of finely divided mineral particles which comprises spraying such particles with an effective amount of an aqueous solution which contains a diallyl dimethyl ammonium chloride polymer, having an intrinsic viscosity of a least 0.3. It is stated that the preferred intrinsic viscosity is between 0.3 and 0.9. An intrinsic viscosity of 1.6 is also mentioned.

An article by MJ Pearse entitled "An overview of the use of chemical reagents in mineral processing" Minerals Engineering, Pergamon Press, vol.18, no. 2, February 2005 (2005-02), pages 139-149 provides a very general overview of chemical reagents used in mineral processing including flocculants, flotation reagents, dispersants and antiscalants. Miscellaneous uses of reagents in mineral processing and hydrometallurgy are given in table 4 including reference to dust suppressants. No mention is given as to the materials that would be used as dust suppressants or how they may be applied.

Thus there is a need to find a way to achieve improved dust suppression for particulate mineral materials dewatered from a suspension which is red mud. Furthermore there is a need to provide improved dust suppression for particulate mineral materials that overcomes the disadvantages of the prior art.

In one aspect of the invention we provide a novel use of a polymer for the use purpose of suppressing dust formation. Thus in this form we provide the use of a polymer in the transfer of a suspension of particulate mineral material as a fluid to a deposition area which is allowed to stand and dewater, for the purpose of suppressing dust formation of the dewatered material, as the surface dries,
in which the particulate mineral material is red mud,
wherein the polymer is an aqueous solution at a concentration of 0.25 to 5% bv weight of synthetic water-soluble polymer formed from one or more ethylenically unsaturated monomers having an intrinsic viscosity of at least 4 dl/g which is a homopolymer of acrylamide or a copolymer of acrylamide with sodium acrylate.

By applying the polymer to the suspension of the particulate mineral material which is red mud as it is transferred as a fluid we find that the dewatered solid material has significantly reduced dust emissions.

Generally suspended solids may be concentrated in a thickener and this material will for instance leave the thickener as an underflow which will be pumped along a conduit to a deposition area. The conduit can be any convenient means for transferring the material to the deposition area and may for instance be a pipe or a trench. The material remains fluid and pumpable during the transfer stage until the material is allowed to stand.

In the following "the term particulate mineral material" is used to mean red mud.

Desirably the process of the invention is part of the mineral processing operation in which an aqueous suspension of waste solids is optionally flocculated in a vessel to form a supernatant layer comprising an aqueous liquor and an underflow layer comprising thickened solids which form the material. The supernatant layer will be separated from the under flow in the vessel and typically recycled or subjected to further processing. The aqueous suspension of waste solids or optionally, the thickened underflow is transferred, usually by pumping, to a deposition area, which may for instance be a tailings dam or lagoon. The material may consist of only mainly fine particles, or a mixture of fine and coarse particles. Optionally, additional coarse particles may be combined with the aqueous suspension at any convenient point prior to discharge at the deposition area. Once the material has reached the deposition area it is allowed to stand and dewater and in addition preferably rigidification takes place. The polymer may be added to the material in an effective amount at any convenient point, typically during transfer. In some cases the aqueous suspension may be transferred first to a holding vessel before being transferred to the deposition area. After deposition of the suspension of particulate mineral material it will dewater to form a dewatered solid with reduced dusting characteristics. Preferably the dewatered suspension of particulate mineral material will form a compact and dry solid mass through the combined actions of sedimentation, drainage and evaporative drying. The surface of the deposited particulate mineral material will reach a substantially dry state but with significantly reduced dusting by comparison to the same material that has not been treated with the polymer according to the present invention.

Suitable doses of polymer range from 10 grams to 10,000 grams per tonne of material solids. Generally the appropriate dose can vary according to the particular material and material solids content. Preferred doses are in the range 30 to 3,000 grams per tonne, more preferably 30 to 1000 grams per tonne, while even more preferred doses are in the range of from 60 to 200 or 400 grams per tonne. The polymer may be added to the suspension of red mud , e.g. the tailings slurry, in solid particulate form alternatively as an aqueous solution that has been prepared by dissolving the polymer into water or an aqueous medium.

The mineral material particles is red mud.

The fine tailings or other material which is pumped may have a solids content in the range 10% to 80% by weight. The slurries are often in the range 20% to 70% by weight, for instance 45% to 65% by weight. The sizes of particles in a typical sample of the fine tailings are substantially all less than 25 microns, for instance about 95% by weight of material is particles less than 20 microns and about 75% is less than 10 microns. The coarse tailings are substantially greater than 100 microns, for instance about 85% is greater than 100 microns but generally less than 10,000 microns. The fine tailings and coarse tailings may be present or combined together in any convenient ratio provided that material remains pumpable.

The dispersed particulate solids may have a bimodal distribution of particle sizes. Typically this bimodal distribution may comprise a fine fraction and a coarse fraction, in which the fine fraction peak is substantially less than 25 microns and the coarse fraction peak is substantially greater than 75 microns.

We have found better results are obtained in terms of dewatering and rigidification when the material is relatively concentrated and homogenous. The invention nonetheless also provides improved dust suppression. It may also be desirable to combine the addition of the polymer with other additives. For instance the flow properties of the material through a conduit may be facilitated by including a dispersant. Typically where a dispersant is included it would be included in conventional amounts. However, we have found that surprisingly the presence of dispersants or other additives does not impair the dewatering, rigidification or indeed the dust suppression of the material. It may also be desirable to pre-treat the material with either an inorganic or organic coagulant to pre-coagulate the fine material to aid its retention in the dewatered particulate material.

In the present invention the polymer is added directly to the aforementioned suspension of particulate mineral material that is being transferred. The polymer may consist wholly or partially of water-soluble polymer. Thus the polymer may comprise a blend of cross-linked polymer and water soluble polymer, provided sufficient of the polymer is water-soluble or behaves as though it is water-soluble to bring about dewatering on standing. The polymer may be in substantially dry particulate form but preferably is added as an aqueous solution.

The polymer should comprise polymer which is wholly or at least substantially water soluble. The water soluble polymer may be branched by the presence of branching agent, for instance as described in WO-A-9829604, for instance in claim 12, or alternatively the water soluble polymer is substantially linear.

Preferably the water soluble polymer is of moderate to high molecular weight. It will have an intrinsic viscosity of at least 4 dl/g (measured in 1 M NaCl at 25°C) and generally at least 5 or 6 dl/g, although the polymer may be of significantly high molecular weight and exhibit an intrinsic viscosity of 25 dl/g or 30 dl/g or even higher. Preferably the polymer will have an intrinsic viscosity in the range of 8dl/g to 25 dl/g, more preferably 11 dl/g or 12 dl/g to 18 dl/g or 20 dl/g.

Intrinsic viscosity of polymers may be determined by preparing an aqueous solution of the polymer (0.5-1 % w/w) based on the active content of the polymer. 2 g of this 0.5-1 % polymer solution is diluted to 100 ml in a volumetric flask with 50 ml of 2M sodium chloride solution that is buffered to pH 7.0 (using 1.56 g sodium dihydrogen phosphate and 32.26 g disodium hydrogen phosphate per litre of deionised water) and the whole is diluted to the 100 ml mark with deionised water. The intrinsic viscosity of the polymers are measured using a Number 1 suspended level viscometer at 25°C in 1 M buffered salt solution.

The polymer is a homopolymer of acrylamide or a copolymer of acrylamide with sodium acrylate.

In the invention, the water soluble polymer may be formed by any suitable polymerisation process. The polymers may be prepared for instance as gel polymers by solution polymerisation, water-in-oil suspension polymerisation or by water-in-oil emulsion polymerisation. When preparing gel polymers by solution polymerisation the initiators are generally introduced into the monomer solution.

Optionally a thermal initiator system may be included. Typically a thermal initiator would include any suitable initiator compound that releases radicals at an elevated temperature, for instance azo compounds, such as azo-bisisobutyronitrile. The temperature during polymerisation should rise to at least 70°C but preferably below 95°C. Alternatively polymerisation may be effected by irradiation (ultra violet light, microwave energy, heat etc.) optionally also using suitable radiation initiators. Once the polymerisation is complete and the polymer gel has been allowed to cool sufficiently the gel can be processed in a standard way by first comminuting the gel into smaller pieces, drying to the substantially dehydrated polymer followed by grinding to a powder. Alternatively polymer gels may be supplied in the form of polymer gels, for instance as gel polymer logs.

Such polymer gels may be prepared by suitable polymerisation techniques as described above, for instance by irradiation. The gels may be chopped to an appropriate size as required and then on application mixed with the material as partially hydrated water soluble polymer particles.

The polymers may be produced as beads by suspension polymerisation or as a water-in-oil emulsion or dispersion by water-in-oil emulsion polymerisation, for example according to a process defined by EP-A-150933, EP-A-102760 or EP-A126528.

Alternatively the water soluble polymer may be provided as a dispersion in an aqueous medium. This may for instance be a dispersion of polymer particles of at least 20 microns in an aqueous medium containing an equilibrating agent as given in EP-A-170394. This may for example also include aqueous dispersions of polymer particles prepared by the polymerisation of aqueous monomers in the presence of an aqueous medium containing dissolved low IV polymers such as poly diallyl dimethyl ammonium chloride and optionally other dissolved materials for instance electrolyte and/or multi-hydroxy compounds e. g. polyalkylene glycols, as given in WO-A-9831749 or WO-A-9831748.

The aqueous solution of water-soluble polymer is typically obtained by dissolving the polymer in water or by diluting a more concentrated solution of the polymer. Generally solid particulate polymer, for instance in the form of powder or beads, is dispersed in water and allowed to dissolve with agitation. This may be achieved using conventional make up equipment. Desirably, the polymer solution can be prepared using the Auto Jet Wet (trademark) supplied by Ciba Specialty Chemicals. Alternatively, the polymer may be supplied in the form of a reverse phase emulsion or dispersion which can then be inverted into water.

The polymer solution will be used at a concentration between 0.25 and 5% by weight of polymer. More preferably the concentration will range from 0.25% or 0.5% to about 1 or 1.5%.

When aqueous suspensions of fine and coarse particulate materials are being combined for the purposes of co-disposal, the effective dewatering and dust suppressing amount of the water-soluble polymer solution will normally be added during or after the mixing of the different waste streams into a homogeneous slurry.

Typically the suspension of particulate mineral material may be transferred along a conduit and through an outlet to the deposition area. The suspension of particulate mineral material will then be allowed to dewater at the deposition area. Preferably the suspension of particulate material that has been transferred to the deposition area will also rigidify upon standing. In many cases the deposition area will already contain rigidified mineral material. Suitably the suspension of particulate mineral material upon reaching the deposition area will flow on the surface of previously rigidified mineral material and the material will be allowed to stand and rigidify to form a stack.

Preferably the material will be pumped as a fluid to an outlet at the deposition area and the material allowed to flow over the surface of rigidified material. The material is allowed to stand and rigidify and therefore forming a stack of rigidified material. This process may be repeated several times to form a stack that comprises several layers of rigidified material. The formation of stacks of rigidified material has the advantage that less area is required for disposal.

In a mineral processing operation where a suspension containing solids is flocculated in a thickener in order to separate the suspension into a supernatant layer and an underflow material, the material can typically be treated at any suitable point after flocculation in the thickener but before the material is allowed to stand. Typically the suspension is transferred along a conduit to a deposition area. This is normally achieved by pumping the suspension of particulate mineral material. A suitable and effective dewatering and dust suppressing amount of the water-soluble polymer can be mixed with the material prior to or during a pumping stage. In this way the polymer can be distributed throughout the material. Alternatively, the polymer can be introduced and mixed with the material subsequently to a pumping stage. The most effective point of addition will depend upon the substrate and the distance from the thickener to the deposition area. If the conduit is relatively short it may be advantageous to dose the polymer solution close to where the material flows from the thickener. On the other hand, where the deposition area is significantly remote from the thickener in may be desirable to introduce the polymer solution closer to the outlet. In some instances in may be convenient to introduce the polymer solution into the material as it exits the outlet. Frequently it may be desirable to add the polymer to the suspension before it exits the outlet, preferably within 10 metres of the outlet.

The rheological characteristics of the material as it flows through the conduit to the deposition area is important, since any significant reduction in flow characteristics could seriously impair the efficiency of the process. It is important that there is no significant settling of the solids as this could result in a blockage, which may mean that the plant has to be closed to allow the blockage to be cleared. In addition it is important that there is no significant reduction in flow characteristics, since this could drastically impair the pumpability on the material. Such a deleterious effect could result in significantly increased energy costs as pumping becomes harder and the likelihood of increased wear on the pumping equipment.

The rheological characteristics of the suspension of particulate mineral material as it dewaters is important, since once the material is allowed to stand it is important that flow is minimised and that ideally solidification and preferably rigidification of the material proceeds rapidly. If the material is too fluid then it will not form an effective stack and there is also a risk that it will contaminate water released from the material. It is also desirable that the rigidified material is sufficiently strong to remain intact and withstand the weight of subsequent layers of rigidified material being applied to it.

Preferably the process of the invention will achieve a heaped disposal geometry and will co-immobilise the fine and coarse fractions of the solids in the material and also allowing any released water to have a higher driving force to separate it from the material by virtue of hydraulic gravity drainage. The heaped geometry appears to give a higher downward compaction pressure on underlying solids which seems to be responsible for enhancing the rate of dewatering. We find that this geometry results in a higher volume of waste per surface area, which is both environmentally and economically beneficial.

It is not possible to achieve the objectives of the invention by adapting the flocculation step in the thickener. For instance flocculation of the suspension in the thickener to provide an underflow sufficiently concentrated such that it would stack would be of a little value since it would not be possible to pump such a concentrated underflow. Furthermore adding polymer into the thickener would not achieve the desired effect of improving suppression of the dewatered mineral material. Instead we have found that it is essential to treat the material that has been formed as an underflow in the thickener. It appears that separately treating the thickened solids in the underflow allows the material to rigidify effectively without compromising the fluidity during transfer.

A preferred feature of the present invention is the rigidification during the release of aqueous liquor that preferably occurs during the dewatering step. Thus in a preferred form of the invention the material is dewatered during rigidification to release liquor containing significantly less solids. The liquor can then be returned to the process thus reducing the volume of imported water required and therefore it is important that the liquor is clear and substantially free of contaminants, especially migrating particulate fines. Suitably the liquor may for instance be recycled to the thickener from which the material was separated as an underflow. Alternatively, the liquor can be recycled to the spirals or other processes within the same plant.

The following example illustrate the invention.

### Example 1

At a confidential field trial in Western Australia red mud (alumina refinery mineral tailings) as a thickener underflow is transferred to a disposal area. The red mud feed contained waste mineral solids suspended in water at a concentration of 30 % wt/wt.

Prior to being sent to the disposal area, the red mud suspension had been processed through several washing and thickening stages to remove process chemicals and soluble Alumina. During each of these thickening stages, the suspension was treated with the washer flocculants i) a polymer of acrylamide with sodium acrylate in a weight ratio of 25/75 having an intrinsic viscosity of 20 dl/g and ii) a polymer of acrylamide with sodium acrylate in a weight ratio of 11/89 having an intrinsic viscosity of 24 dl/g at dosages between 10 and 150 g per tonne.

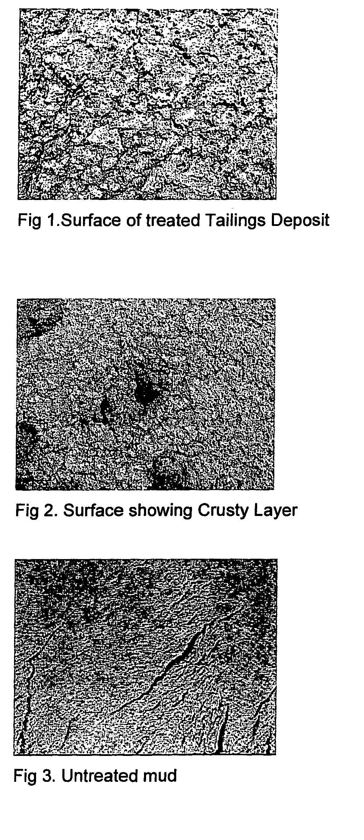

The red mud is treated with a polymer of acrylamide with sodium acrylate in a weight ratio of 29/71 having an intrinsic viscosity of 26 dl/g. The polymer is added at the point of discharge in a pipeline at the disposal area. The polymer is dosed as a 0.5% aqueous solution in lake water. Lake water is the liquor runoff from the drainage of red mud in the bays. The red mud is dosed between 130 and 170 g per ton based on dry weight of polymer on solids content of red mud. The results are shown in figure 1.

This was repeated without the addition of polymer to the red mud from the thickener to the disposal area. The results are shown in figure 3.

It can be seen from the results that the treated red mud shown in figure 1 and 2 has a crusty layer which would not be prone to formation of dust whereas the untreated red mud shown in figure 3 does not have a crusty layer and dust formation would be significantly increased.

## Claims

1. Use of a polymer in the transfer of a suspension of particulate mineral material as a fluid to a deposition area which is allowed to stand and dewater, for the purpose of suppressing dust formation of the dewatered material as the surface dries,
in which the particulate mineral material is red mud.
wherein the polymer is an aqueous solution at a concentration of 0.25 to 5% by weight of synthetic water-soluble polymer formed from one or more ethylenically unsaturated monomers having an intrinsic viscosity of at least 4 dl/g which is a homopolymer of acrylamide or a copolymer of acrylamide with sodium acrylate .

## Patentansprüche

1. Verwendung eines Polymeren beim Transfer einer Suspension von teilchenförmigem Mineralmaterial bzw. mineralische Schwebstoffmaterial als ein Fluid zu einem Ablagerungsbereich, welchem ermöglicht wird zu stehen und sich zu entwässern, und zwar zum Zwecke des Unterdrückens einer Staubbildung des entwässerten Materials, wenn die Oberfläche trocknet,
worin das teilchenförmige Mineralmaterial Rotschlamm ist,
worin das Polymer eine wässrige Lösung mit einer Konzentration von 0,25 bis 5 Gew.-% an synthetischem wasserlöslichem Polymer ist, gebildet aus einem oder mehreren ethylenisch ungesättigten Monomeren mit einer inneren Viskosität von mindestens 4 dl/g, welches ein Homopolymer von Acrylamid oder ein Copolymer von Acrylamid mit Natriumacrylat ist.

## Revendications

1. Utilisation d'un polymère dans le transfert d'une suspension de matière minérale particulaire sous forme d'un fluide vers une zone de sédimentation qu'on laisse reposer et se déshydrater, dans le but de supprimer la formation de poussière de la matière déshydratée lorsque la surface sèche,
dans laquelle la matière minérale particulaire est une boue rouge,
dans laquelle le polymère est une solution aqueuse à une concentration de 0,25 à 5 % en poids de polymère hydrosoluble synthétique formé à partir d'un ou plusieurs monomères à insaturation éthylénique ayant une viscosité intrinsèque d'au moins 4 dl/g qui est un homopolymère d'acrylamide ou un copolymère d'acrylamide avec l'acrylate de sodium.
